# EUROPEAN PATENT SPECIFICATION

(11) **EP 2 528 302 B1**
(45) Date of publication and mention of the grant of the patent: **11.05.2016**
(21) Application number: 12168593.7
(22) Date of filing: 18.05.2012
(51) Int. Cl.: H04L 29/08, G01D 4/00

(54) **Cloud enabled virtual gateway**
Cloud-fähiges virtuelles Gateway
Passerelle virtuelle validée en nuage

(30) Priority: 26.05.2011 US 201113116614
(43) Date of publication of application: 28.11.2012
(73) Proprietor: DIGI INTERNATIONAL INC., Minnetonka, MN 55343 (US)
(72) Inventor: Young, Joel K., Eden Prairie, MN Minnesota 55347 (US); Cole, Bradford D., Excelesior, MN Minnesota 55331 (US); Fodor, Eugene F., Plymouth, MN Minnesota 55343 (US); Zarns, Michael L., Medina, MN Minnesota 55340 (US)
(74) Representative: Curley, Donnacha John

(56) References cited:
- GB-A- 2 466 107
- US-A1- 2009 243 869
- US-A1- 2011 029 461

## Description

### CLAIM OF PRIORITY

This patent application claims the benefit of priority to U.S. Patent Application Serial Number 13/116,614, titled "Cloud Enabled Virtual Gateway," filed on May 26, 2011.

### BACKGROUND

Automation and monitoring devices (devices), such as smart energy thermostats or alarm system activity sensors, can provide information and control for various systems (e.g., heating and cooling systems) at a geographic location (e.g., a home or office building). It can be advantageous to access that information via a wide area network such as the Internet or via a private network such as Ethernet. Typically, a service provider, such as a power utility, uses a physical gateway at each location to access the devices (e.g., for energy monitoring and control). The gateway generally provides a network interface for access to the location as well as one or more interfaces to the devices present in the location.

Some locations may use the services of more than one service provider to manage local services. For example, one service provider may provide energy related services, such as heating and cooling and its associated monitoring and control, while a second service provider may provide security related services, with its monitoring and control. In some approaches, each service provider uses one or more devices at the location to deliver its respective service. Also, each service provider will typically install its own physical gateway at the location to interface with the service provider's own devices. Generally, the devices associated with one service provider will only communicate with that service provider's gateway.

Documents US 2011/029461, US 2009/243869 and GB 2466107 represent relevant prior art.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
Fig. 1 illustrates an example system for a cloud enabled virtual gateway, according to one embodiment.
Figs. 2A-2B illustrate flowcharts for an example method for a cloud enabled virtual gateway, according to one embodiment.
Fig. 3a illustrates a flowchart for an example method for a cloud enabled virtual gateway, according to one embodiment.
Fig. 4 illustrates a flowchart for an example method of using a cloud enabled virtual gateway with a cloud-based application and a third-party system to communicate with a device.
Fig. 5 illustrates a block diagram of an example machine upon which any one or more of the systems can use or methods can be run.

### DETAILED DESCRIPTION

As used herein, location refers to a geographic location that can include a section of a structure, a structure (or building), campus, or other physical region in which service provider devices can be deployed to provide a service for the owners, managers, or other interested parties of the location. For example, a location can be a factory in which an energy utility's devices are deployed to provide energy monitoring and control services to the operators of the factory, or a room within that factory. As described above, more than one service provider can provide services to a location. When this occurs, each service provider installs the devices it uses to provide its service, as well as a gateway to connect those devices to the service provider's external systems. Thus, multiple service providers at a location results in a multiplying of the gateways, each gateway requiring access to an external network. Further, because devices of one service provider do not communicate with the devices, or gateways, of other service providers, duplication of devices can occur. For example, if an energy utility and a security service provider each use a thermostat at the location to deliver their respective services, two thermostats may be installed at the location. The duplication of devices and gateways can increase installation and management costs for the service providers as well as the location's operator.

A service provider can use a cloud enabled virtual gateway to mitigate the previously described duplication and introduce flexibility and efficiency for the service provider. The virtual gateway can be added to the service provider's cloud architecture and provide access to the devices at the location to cloud-based applications of the service provider. As used herein, cloud architecture (e.g. a cloud) is a logical computing system including one or more virtualization layers between cloud-based applications and hardware components providing processing, memory (i.e., system memory that maintains the state of a currently running computer system), and storage, such as computer servers, storage devices, and network components among other hardware elements. In some examples, the cloud includes a plurality of computer servers to provide processor, memory, and storage resources to a cloud infrastructure virtualization layer. In some examples, the cloud includes one or more cloud platform layers that provide a variety of application programming interfaces (APIs) for cloud-based applications to use the cloud infrastructure.

The virtual gateway appears as a physical gateway at the location. It can therefore be used by the cloud-based application(s) without changing the cloud-based applications. In one approach, the virtual gateway accesses the devices at the location directly, in the case of the service provider's own devices, or through the system of a third-party. For example, an energy utility may not install a thermostat, but rather use a previously installed thermostat of a security provider via a web service to the security provider's system. In this example, the security provider's system is communicatively coupled to the thermostat and can both retrieve information from the thermostat, as well as send commands to the thermostat. In this way, the service provider avoids installing a physical gateway at the location without impacting investments in its cloud-based applications. Further, the service provider can leverage previously installed devices of another service provider to reduce the number of devices installed to provide the service.

Reducing the installation of physical gateways at a location not only saves the service provider equipment costs, but also reduces management and energy costs. Bringing the gateway into the service provider's cloud also allows for more information processing at the virtual gateway because the virtual gateway is not limited to the typically low-power physical gateway hardware. Further, because the virtual gateway can be connected to third-party systems, it can leverage the power of those systems. For example, if a security provider's system includes the ability to retrieve the current temperature of a location from a thermostat, the security provider's system can convert the raw output of a thermostat into a standardized format to deliver via its application programming interface (API). Thus, not only can using the virtual gateway allow the service provider to leverage other provider's equipment, but it can also allow the leveraging of the other provider's processing systems.

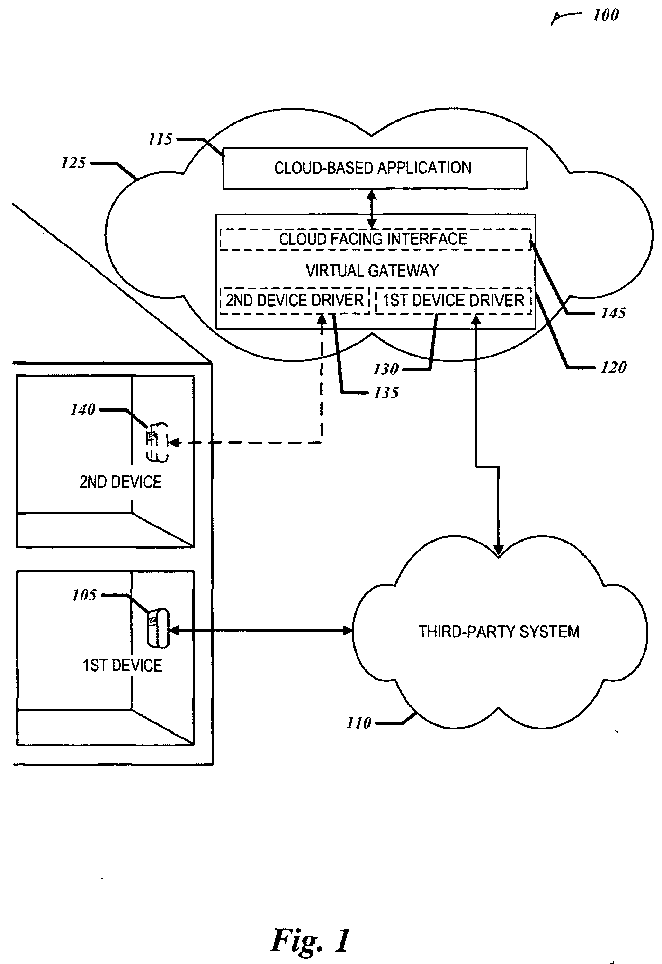

Fig. 1 illustrates an example system 100 for a cloud enabled virtual gateway, according to one embodiment. The system 100 can include a first device 105 (e.g., a thermostat, light switch, activity monitor, utility meter, among other monitoring, automation, or control devices of a service provider) at a location, the first device 105 communicatively coupled to a third-party system 110 (e.g., an energy utility's system). The system 100 can also include a cloud-based application 115, in a service provider cloud 125, communicatively coupled to a virtual gateway 120. The virtual gateway 120 can also be communicatively coupled to the third-party system 110. In some examples, the virtual gateway 120 includes a first device driver 130 used to communicatively couple with the third-party system 110. In some examples, the virtual gateway 120 includes a second device driver 135 used to communicatively couple to a second device 140 (e.g., a thermostat, light switch, activity monitor, utility meter, among other monitoring, automation, or control devices of a service provider) at the location. In some examples, the virtual gateway 120 includes a cloud-based application facing interface 145 used to communicatively couple cloud-based application facing interface 145 to the cloud-based application 115. In some examples, the first device 105 and/or the second device 140 are utility meters (e.g., electrical, gas, water, etc.). In some examples, the first device 105 and/or the second device 140 are monitoring and automation (M&A) devices. As used herein, M&A devices are devices that are specifically tasked to perform monitoring or control of a physical environment or system and are not general purpose devices (such as a home computer). In some examples, M&A devices are packaged in small, low-powered form factors without an external user interface (e.g., a graphical user interface). Example M&A devices include thermostats, thermometers, electronic door locks or latches, electronic light switches, pumps (e.g., sump pump, or industrial pumps), activity sensors (e.g., motion detectors, sound detectors, access detectors such as card readers, etc.), electrical actuators (e.g., a garage door opener), environmental sensors (e.g., light sensors, barometric pressure sensors, gas sensors such as carbon monoxide or carbon dioxide sensors, and fire alarms among others) and utility meters among others.

The virtual gateway 120 of the system 100 can be configured to masquerade as a physical gateway at the location to the cloud-based application 115. As used herein, masquerading means to both behave like and appear as a thing. Thus, the virtual gateway 120 appears as a physical gateway at the location to the cloud-based application 115 and also, as observed by the cloud-based application 115, behaves like the physical gateway (i.e., accepts the same inputs and returns the same outputs). In some examples, masquerading includes one or more of mapping API calls from the physical gateway's calls to the virtual gateway's 120 application calls, using one or more network techniques (e.g., Network Address Translation) allowing the virtual gateway 120 is addressable in the same way a physical gateway at the location is addressable, or by defining characteristics of the virtual gateway 120 in a lookup datastore (e.g., an x500 directory) that cause a cloud-based application 115 to communicate with the virtual gateway 120 instead of a physical gateway when the cloud-based application 115 attempts to gain access to the first device 105 or second device 140 at the geographic location. By masquerading as a physical gateway at the location, the cloud-based applications 115 can use the virtual gateway 120 in the same manner that the cloud-based applications 115 would have used a physical gateway at the location. Thus, the cloud-based application 115 does not need to be modified to use the virtual gateway 120. In some examples, the virtual gateway 120 can be optionally configured to include the cloud-based application facing interface 145 of a physical gateway. Including the cloud-based application facing interface 145 allows the virtual gateway 120 to present the same API to the cloud-based application 115 as the API a gateway installed at the location would have presented. In some examples, the virtual gateway 120 is configured to use a network address (e.g., Internet Protocol (IP) address) associated with a physical gateway at the location to masquerade to the cloud-based application 115. In this way, the virtual gateway 120 can be accessed by the cloud-based application 115 in the same way the cloud-based application 115 would have accessed the physical gateway if it were present. By successfully masquerading as a gateway at the location, the virtual gateway 120 allows the cloud-based application 115 to operate without modification, thus saving development time and money. In some examples, the virtual gateway 120 is in the service provider cloud 125 with the cloud-based application 115. Masquerading as a physical gateway allows the virtual gateway 120 to be flexibly deployed in, for example, the service provider cloud 125 even when some devices at other locations are accessed by the cloud-based application 115 through physical gateways at those locations. That is, the benefits of the virtual gateway 120 can be achieved without undue impact to a service provider's current systems.

The virtual gateway 120 can be configured to receive a request, from the cloud-based application 115, for the first device 105. In some examples, the virtual gateway 120 is configured to receive the request in a first protocol. For example, the first protocol can include the API calls of the cloud-based application facing interface 145, as well as a transmission protocol such as Transmission Control Protocol over IP (TCP/IP). In some examples, the first protocol is any protocol that the cloud-based application 115 could have used to communicate with a physical gateway at the location. These may include a variety of systems calls as well as a variety of communications mechanisms (e.g., Universal Data Packet (UDP), or proprietary transmission mechanisms). In some examples, the request can include one or more device (e.g., first device 105) commands corresponding to one or more actions of the device. For example, the request can include a thermostat command to raise the temperature at the location. The request can also include a thermostat command to report on the current temperature, or to report on the operating status of the thermostat. Thus, in some examples, the request can include an inquiry for information from the device (e.g., first device 105 or second device 140).

The virtual gateway 120 can be configured to communicate with the third-party system 110 to satisfy the request. Here, satisfying the request means executing commands, and/or retrieving data specified in the request. For example, if the request includes an inquiry as to the temperature reading of a thermostat, satisfying the request can include retrieving the temperature reading from the thermostat. In some examples, the virtual gateway 120 is configured to communicate with the third-party system 110 using a second protocol. Here, the second protocol can be different than the first protocol. In some examples, the second protocol is different than the first protocol. In some examples, the second protocol is specific to the third-party system 110. Examples of the second protocol can include specific APIs of the third-party system 110, remote procedure call (RPC) implementations (e.g., CORBA, SOAP, web services, Java RPC, etc.), and/or transmission protocols (e.g., ATM, TCP/IP, wireless including WiFi, WiMax, CDMA, or other cellular carrier protocols).

In some examples, to facilitate communication in the second protocol, the virtual gateway 120 can optionally include a first device driver 130 configured to communicate in the second protocol to the third-party system 110. In some examples, the first device driver 130 can be configured to translate the request in the first protocol to a translated request in the second protocol. For example, the first protocol may label a parameter as A, whereas the second protocol may label the same parameter B. The first device driver 130 would then map the value of A to B when the request is transmitted to the third-party system 110. In some examples, the translation can include mapping values from the request into one or more translated requests. That is, there can be a one-to-one, one-to-many, many-to-one, or many-to-many correlation between the request(s) and the translated requests(s). In some examples, the translation can include converting an encoding, field size, or other attribute of the request into the translated request.

In some examples, the first device driver 130 can be configured to receive a reply from the third-party system 110 in response to the request. The first device driver 130 can also be configured to transmit a message to the cloud-based application 115 based on the received reply. Thus, the original request from the cloud-based application 115 is satisfied when the message is transmitted. In some examples, the message is a translation of the reply in the second protocol into the first protocol.

In some examples, the first device driver 130 aggregates data from two or more replies to create the message. In some examples, the first device driver 130 can be configured to receive device information from the third-party system 110. This receipt of information can be in response to the request or not in response to the request. For example, a security monitoring device may be configured to report in at specified intervals. The third-party system 110 may receive these reports and forward them on, as they are received, to the first device driver 130 (or the virtual gateway 120 generally). The first device driver 130 can be configured to then store the device information. Once the device information is stored, the first device driver 130 (or the virtual gateway 120) can use the stored device information to satisfy the request. Thus, the system 100 can accommodate devices that report in to the system 100 as well as the cloud-based application 115 requests. In some examples, the stored device information can be forwarded onto the cloud-based application 115 in the message form previously discussed without receipt of a cloud-based application 115 request by the virtual gateway 120.

By interfacing with the third-party system 110, the virtual gateway 120 allows a service provider to leverage the equipment and processing power of a third-party with devices installed at the geographical location. In order to operate the service provider's own devices at the location, the virtual gateway 120 can optionally include a second device driver 135 configured to communicatively couple to the second device 140. In some examples, the second device driver 135 receives a connection request from the second device 140 and opens and maintains the connection. In some examples, the second device driver 135 initiates the connection with the second device 140. In some examples, the second device driver 135 initiates the connection and drops the connection when after satisfying the request. The second device 140 can be any device (e.g., a thermostat, light switch, activity monitor, utility meter, among other monitoring, automation, or control devices of a service provider) a service provider might deploy with its service at the location. In some examples, the second device 140 is configured to communicate over a network to connect to the second device driver 135. In some examples, the virtual gateway 120 is configured to receive a request for the second device 140 from the cloud-based application 115. In some examples, this second request is in the first protocol described above. In some examples, the second device driver 135 communicates with the second device 140 using a third protocol. In some examples, the third protocol is different than the first or second protocols. In some examples, the third protocol is specific to the second device 140. Thus, the second device driver 135 communicates in a protocol specific to the second device 140.

In some examples, the second device driver 135 can be configured to receive information from the second device 140, store the device information, and use the stored information to satisfy the cloud-based application 115 request directed to the second device 140. As discussed above with respect to the first device driver 130, this receipt of device information can be in response to the request or based on a reporting period, a device event, or other conditions leading the second device 140 to transmit information.

Device drivers, as described above, allow the virtual gateway 120 to be flexibly configured. For example, if a new device is installed at the location, the virtual gateway 120 does not have to be re-developed. Instead, a new device driver, specific to the installed device, can be loaded into the virtual gateway 120. Moreover, the same configuration can satisfy the addition of new third-party systems and devices.

A virtual gateway 120 as described above allows a service provider to flexibly deploy services while saving in equipment and management costs. The operators of a location can also see benefits when valuable space and energy are conserved by avoiding the typically duplicative installed devices of multiple service providers. Thus, a cloud enabled virtual gateway includes many benefits to make deploying monitoring and automation services more attractive to both service providers and locations serviced by those providers.

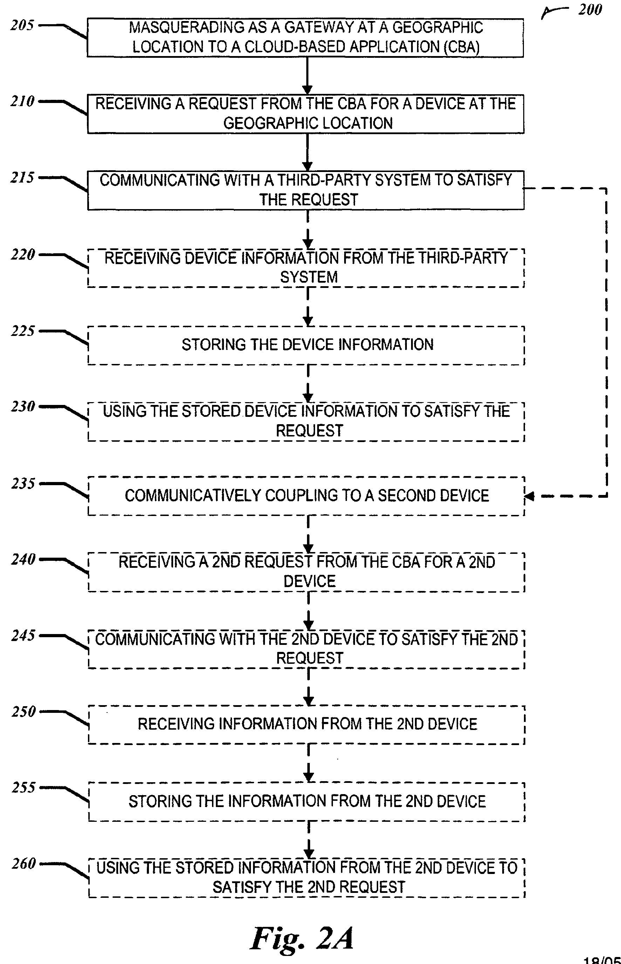

Figs. 2A-2B illustrate flowcharts for an example method 200 for a cloud enabled virtual gateway, according to one embodiment. In some examples, one or more components of the system 100 shown in Fig. 1 can be used individually, or in any combination, to implement the operations of the method 200. In some examples, components not shown in Fig. 1 can be used alone, or in any combination with the components of the system 100 to implement the operations of the method 200. Fig. 2A illustrates a flowchart for operations 205-215 and optional operations 220-260 of a virtual gateway 120 implementation.

At operation 205, the virtual gateway 120 masquerades as a gateway at a geographic location to a cloud-based application 115. That is, the virtual gateway 120 appears and behaves as a physical gateway would if it were installed at the location. In some examples the virtual gateway 120 is in a service provider cloud 125 with the cloud-based application 115.

At operation 210, the virtual gateway 120 receives a request from the cloud-based application 115 for a device (e.g., first device 105) at the geographic location. In some examples, receiving the request can include using a first protocol. As described above, the first protocol can encompass the format of the request (i.e., the field names and sizes, as well as encoding), an RPC protocol, and/or a transmission protocol. In some examples, the request can include an inquiry for information from the device (e.g., first device 105). In some examples, the request can include device commands to initiate one or more actions by the device. For example, the request could include a "restart" command to power cycle the first device 105.

At operation 215, the virtual gateway 120 communicates with a third-party system 110 to satisfy the request, the third-party system 110 being communicatively coupled to the device (e.g., first device 105). Satisfying the request includes performing the actions of the request and/or retrieving data base on the request. In some examples, communicating with the third-party system 110 includes using a second protocol. In some examples, the second protocol is different than the first protocol. In some examples, the second protocol is specific to the third-party system 110 (i.e., two different third-party systems 110 would be associated with two different second protocols). In some examples, using the second protocol can include translating (e.g., by the virtual gateway 120 or first device driver 130) the request in the first protocol into a request in the second protocol. In some examples, translating can include mapping fields in the first protocol request to fields in the second protocol request, omitting fields, re-encoding, or correlating one or more requests in the first protocol to one or more requests in the second protocol. Any manipulation of the request in the first protocol is contemplated to transmit the request in the second protocol to the third-party system 110.

In some examples, the method 200 includes transmitting a message to the cloud-based application 115 in response to receiving a reply from the third-party system 110. In some examples, the message can be a first protocol translated version of the reply in the second protocol.

At operation 220, the method 200 optionally receives device information from the third-party system 110. In some examples, the device information is received without an initiating request. For example, if a fire alarm is tripped at the location, the fire alarm can communicate with the third-party system 110. The third-party system 110 can then communicate the alarm information to the virtual gateway 120.

At operation 225, the device information received at operation 220 is stored. In some examples, the device information is stored in a database of the service provider cloud 125. In some examples, the device information can be stored at another location, or held in memory associated with the virtual gateway 120.

At operation 230, the stored device information of operation 225 is used to satisfy the request. In some examples, the stored device information can be used alone to satisfy the request. In some examples, the stored device information can be used in conjunction with other device information received from the third-party system 110. In some examples, the stored device information can be combined with information from another cloud-based application, or from an external system other than the third-party system 110.

At operation 235, the virtual gateway 120 optionally communicatively couples with a second device (e.g., second device 140). In some examples, the virtual gateway 120 can reach out and connect to the second device 140. In some examples, the second device 140 connects to the virtual gateway 120 and the virtual gateway 120 maintains the connection.

At operation 240, the virtual gateway 120 receives a second request from the cloud-based application 115 for the second device 140 using the first protocol.

At operation 245, the virtual gateway 120 communicates with the second device 140 to satisfy the second request using a third protocol. In some examples, the relationship of the third protocol with the virtual gateway 120, second device 140, first protocol, and the second protocol is the same as that described above with respect to Fig. 1.

At operation 250, the virtual gateway 120 can receive information from the second device 140. In some examples, the second device 140 can send the information can be in response to the second request. In some examples, the second device 140 can send the information in response to elapsed time (e.g., after an interval, periodically, etc.) or in response to an event (e.g., someone breaks a window associated with a security intrusion detection device).

At operation 255, the virtual gateway 120 can store the information received at operation 250. In some examples, the information can be stored in a database (inside or outside of the service provider cloud 125). In some examples, the information can be stored in a memory (page based system memory or page based distributed memory) associated with the virtual gateway 120. In some examples, the information can be stored in one or more files on a hard-disk, or other non-volatile storage device.

At operation 260, the virtual gateway 120 can satisfy the second request by using the stored information from the second device 140. In some examples, the stored information is combined with other second device 140 information (e.g., recently received second device 140 information). In some examples, the stored information can be combined with information related to the second device 140 from other sources inside or outside the service provider cloud 125.

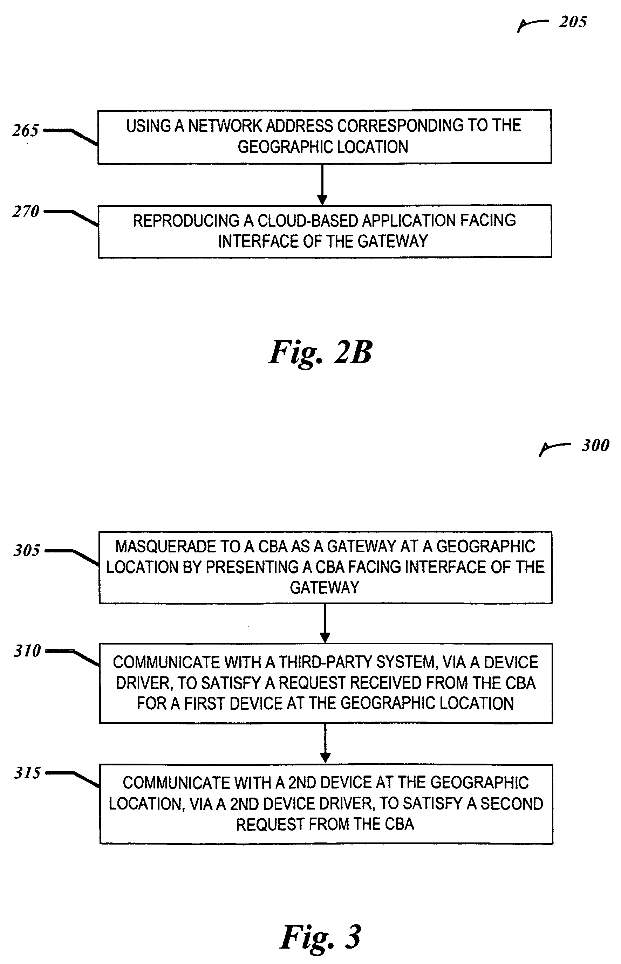

Fig. 2B illustrates a flow chart for optional operations 265-270 of the method 200. Specifically, Fig. 2b illustrates operations that can be optionally included in operation 205.

At operation 265, masquerading as the gateway at the location can include using a network address corresponding to the geographic location. For example, if the service provider has a directory of network address and associated locations, the virtual gateway 120 can use a network address associated with a particular geographic location without actually being present at the location.

At operation 270, masquerading as the gateway at the location can include reproducing a cloud-based application facing interface 145 of the gateway. That is, the virtual gateway 120 can emulate the API the physical gateway would have presented to the cloud-based application 115.

Fig. 3a illustrates a flowchart for an example method 300 for a cloud enabled virtual gateway, according to one embodiment. In some examples, like the method 200, operations of the method 300 can be performed using one or more components of the system 100 in any combination.

At operation 305, the virtual gateway 120 masquerades to a cloud-based application 115 as a gateway at a geographic location by presenting a cloud-based application facing interface 145 of the gateway. In some examples, the virtual gateway 120 can implement a naming convention, address convention, or other mechanism by which to appear, to the cloud-based application 115, to be at the geographic location even when, for example, the virtual gateway 120 is in the service provider cloud 125 with the cloud-based application 115.

At operation 310, the virtual gateway 120 communicates with a third-party system 110, via a device driver (e.g., first device driver 130), to satisfy a request received from the cloud-based application 115 for a first device 105 at the geographic location. In some examples the first device driver 130 is specific to the third-party system 110. In some examples, the first device driver 130 is specific to the first device 105 and the third-party system 110. That is, a different first device driver 130 is used to communicate with a thermostat and an oxygen sensor even if both devices are accessed via the third-party system 110.

At operation 315, the virtual gateway 120 communicates with a second device 140 at the geographic location, via a second device driver 135, to satisfy a second request received from the cloud-based application 115. In some examples, the second device driver 135 connects to the second device 140. In some examples, the second device driver 135 can aggregate device information from more than one physical device to present a virtual second device 140. For example, a separate temperature and heating system control can be combined to be a virtual thermostat.

By masquerading as a gateway at the location, the virtual gateway 120 can seamlessly integrate with existing service provider systems. Further, by incorporating drivers to communicate with a third-party system 110 and directly with a device (e.g., second device 140), the virtual gateway 120 can flexibly communicate with a variety of devices. Moreover, using the third-party system 110, the service provider can use the third-party's devices, and thus reduce the number of devices to install at the location, as well as eliminate physical gateway hardware. Thus, using the method 300 to implement a virtual gateway 120 can provide cost benefits to service providers while also increasing the options available to the service provider in deploying devices at various locations.

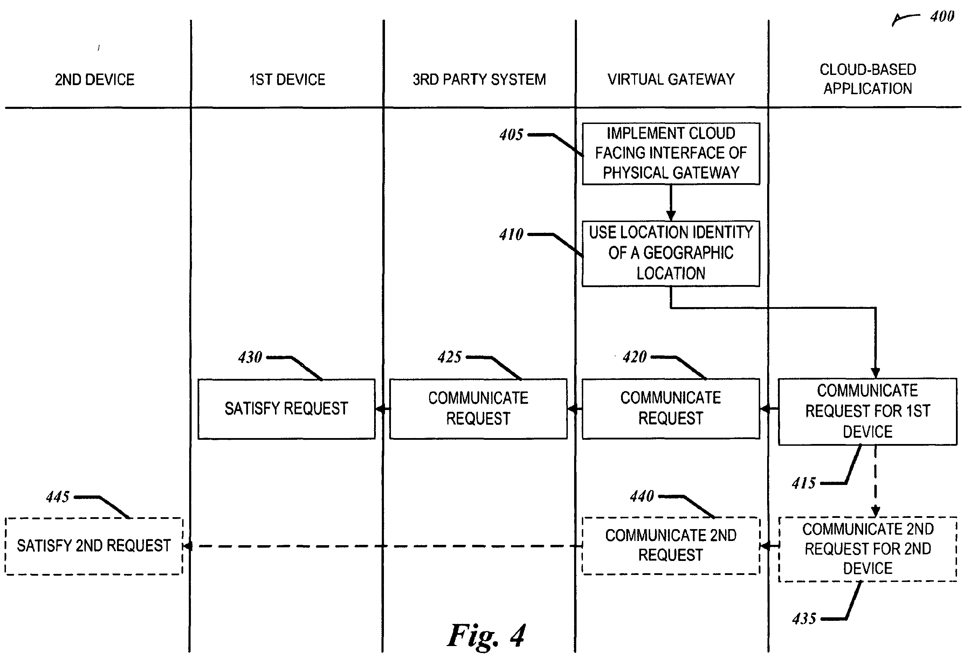

Fig. 4 illustrates a flowchart for an example method 400 of using a cloud enabled virtual gateway with a cloud-based application and a third-party system to communicate with a device. In some examples one or more components shown in Fig. 1 can be used to perform parts of method 400, however any computer hardware capable of perform one or more operations of method 400 is also contemplated.

At operation 405, the virtual gateway 120 implements a cloud-based application facing interface 145 of a physical gateway. In some examples, the virtual gateway 120 implements the entire API of the target physical gateway available to the service provider cloud 125. In some examples, the virtual gateway 120 implements a subset of the cloud-based application facing interface 145 appropriate for the cloud-based application 115. That is, to the cloud-based application 115 the virtual gateway 120 implements the portions of the cloud-based application facing interface 145 used by the cloud-based application 115. Implementing the cloud-based application facing interface 145 satisfies the virtual gateway's 120 "behaves like" aspect of masquerading as the physical gateway.

At operation 410, the virtual gateway 120 uses the location identity of the target geographic location. In some examples, the virtual gateway 120 uses a network address (e.g., an I.P. address) associated with the geographic location in the service provider cloud 125. In some examples, the network address of the virtual gateway 120 is associated, after it is assigned to the virtual gateway 120, to the geographic location in a directory services (e.g., an x500 directory). Thus, to the cloud-based application 115 attempting to contact devices (e.g., first device 105 or second device 140) at the location, the virtual gateway appears to be located at the same location. By adopting an address (or other means of lookup) or modifying a lookup directory to appear to be at the geographic location, the virtual gateway 120 satisfies the "appears as" aspect of masquerading as a physical gateway at the geographic location.

At operation 415, the cloud-based application 115 communicates a request to the virtual gateway 120 for a device (e.g., first device 105) located at the geographic location. In some examples, the first device 105 can be an M&A device such as a thermostat. In some examples, the cloud-based application 115 conducts its communications with the virtual gateway 120 in a first protocol. That is, both the transmission medium (i.e., physical and logical network layers) as well as the message format are consistent for sending and receiving information between the cloud-based application 115 and the virtual gateway 120. In some examples, the cloud-based application 115 requests information from the first device 105 (e.g., temperature from a thermostat). In some examples, the cloud-based application 115 requests the first device 105 to perform an action (e.g., for a thermostat to adjust its temperature set point or to turn the heat on or off).

At operation 420, the virtual gateway 120 communicates the request to the third-party system 110. In some examples communicating the request also includes receiving information in response to the request from the third-party system 110 and communicating that information back to the cloud-based application 115. In some examples, communicating between the virtual gateway 120 and third-party system 110 includes using a second protocol different than the first protocol describe above to communicate between the virtual gateway 120 and the cloud-based application 115. That is, all communications between the virtual gateway 120 and third-party system 110 are conducted using the second protocol. In some examples, the virtual gateway 120 translates between the first protocol and second protocol. In some examples, a first device driver 130 of the virtual gateway 120 is used to translate between the first protocol and the second protocol.

At operation 425, the third-party system 110 communicates the request to the first device 105. In some examples, the first device 105 is accessed through a physical gateway location at the geographic location. In some examples, the third-party system 110 communicates directly with the first device 105. In some examples, the third-party system 110 uses an altogether different communications protocol than those used by the virtual gateway 120.

At operation 430, the first device 105 satisfies the request. In some examples, satisfying the request includes retrieving requested information (e.g., details surrounding a fire alarm such as carbon dioxide levels) and communicating the information to the third-party system 110. In some examples, satisfying the request includes performing an action in accordance with device commands in the request (e.g., silencing the fire alarm).

At operation 435, the cloud-based application 115 can optionally communicate a second request to the virtual gateway 120 for a second device 140 (e.g., a utility meter or M&A device) located at the geographic location. Here, the second device 140 is communicatively coupled directly to the virtual gateway 120. Thus, in this example, the virtual gateway 120 is handling the hybrid gateway situation of directly connected devices (e.g., the second device 140) and indirectly connected devices (e.g., first device 105 through the third-party system 110) for the cloud-based application 115. It is contemplated that the request to the first device 105 is not required before the second request is made, or that either request is dependent upon the other in time or content. Rather, the requests are differentiated by the devices the cloud-based application 115 is attempting to access or control and the virtual gateway 120 determines the means by with the cloud-based application 115 can access or control the device.

At operation 440, the virtual gateway 120 communicates the second request to the second device 140. In some examples, the virtual gateway 120 connects to the second device 140 when the second request is received. In some examples, the second device 140 communicates with the virtual gateway 120 at regular intervals providing windows for the second request to be passed to the second device 140. In some examples, the second device 140 connects to the virtual gateway 120 when it is initiated (e.g., turned on) and the virtual gateway 120. In some examples, the virtual gateway 120 communicates with the second device 140 using a third protocol. In some examples, the third protocol is different than both the first and second protocols discussed above. In some examples, the virtual gateway 120 translates the second request between the first protocol the cloud-based application 115 uses to communicate with the virtual gateway 120 and the second protocol the second device 140 uses to communicate with the virtual gateway 120. In some examples, a second device driver 135 of the virtual gateway 120 is used to translate between the first protocol and the second protocol.

At operation 445, the second device 140 satisfies the second request. The second device 140 satisfies the second request in a similar manner as that described above with respect to the first device 105.

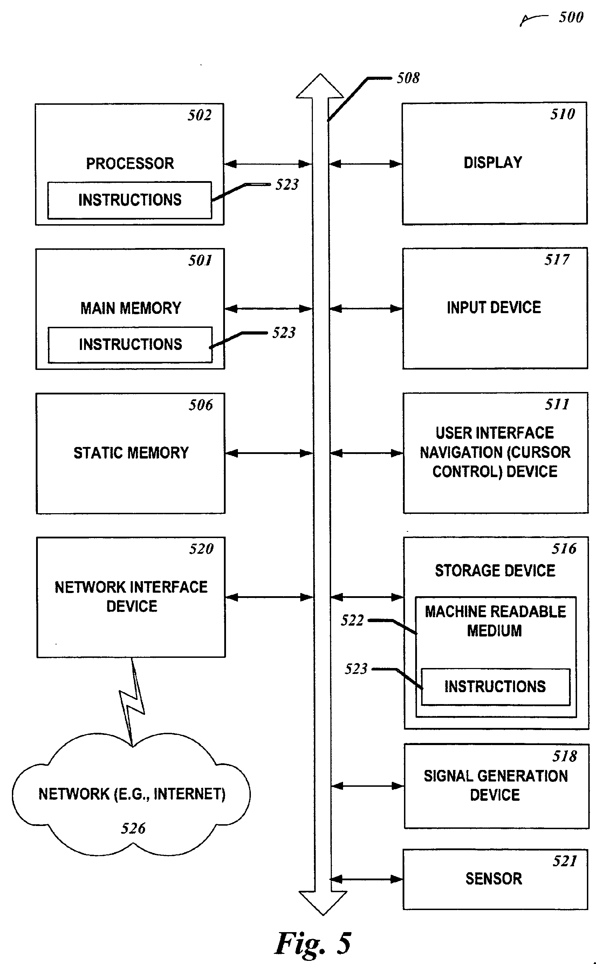

Fig. 5 illustrates a block diagram of an example machine 500 upon which any one or more of the methodologies discussed can be run.

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is a tangible unit capable of performing certain operations and can be configured or arranged in a certain manner. In example embodiments, one or more computer systems (e.g., a standalone, client or server computer system) or one or more processors can be configured by software (e.g., an application or application portion) as a hardware-implemented module that operates to perform certain operations as described herein.

In various examples, a hardware-implemented module can be implemented mechanically or electronically. For example, a hardware-implemented module can comprise dedicated circuitry or logic that is permanently configured (e.g., as a special-purpose processor, such as a field programmable gate array (FPGA) or an application-specific integrated circuit (ASIC)) to perform certain operations. A hardware-implemented module can also comprise programmable logic or circuitry (e.g., as encompassed within a general-purpose processor or other programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) can be driven by cost and time considerations.

Accordingly, the term "hardware-implemented module" should be understood to encompass a tangible entity, be that an entity that is physically constructed, permanently configured (e.g., hardwired) or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor can be configured as respective different hardware-implemented modules at different times. Software can accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules can be regarded as being communicatively coupled. Where multiple of such hardware-implemented modules exist contemporaneously, communications can be achieved through signal transmission (e.g., over appropriate circuits and buses) that connect the hardware-implemented modules. In embodiments in which multiple hardware-implemented modules are configured or instantiated at different times, communications between such hardware-implemented modules can be achieved, for example, through the storage and retrieval of information in memory structures to which the multiple hardware-implemented modules have access. For example, one hardware-implemented module can perform an operation and store the output of that operation in a memory device to which it is communicatively coupled. A further hardware-implemented module can then, at a later time, access the memory device to retrieve and process the stored output. Hardware-implemented modules can also initiate communications with input or output devices and can operate on a resource (e.g., a collection of information).

The various operations of example methods described herein can be performed, at least partially, by one or more processors that are temporarily configured (e.g., by software) or permanently configured to perform the relevant operations. Whether temporarily or permanently configured, such processors can constitute processor-implemented modules that operate to perform one or more operations or functions. The modules referred to herein can, in some example embodiments, comprise processor-implemented modules.

Similarly, the methods described herein can be at least partially processor-implemented. For example, at least some of the operations of a method can be performed by one or processors or processor-implemented modules. The performance of certain of the operations can be distributed among the one or more processors, not only residing within a single machine, but deployed across a number of machines. In some example embodiments, the processor or processors can be located in a single location (e.g., within a home environment, an office environment or as a server farm), while in other embodiments the processors can be distributed across a number of locations.

The one or more processors can also operate to support performance of the relevant operations in a "cloud computing" environment or as a "software as a service" (SaaS). For example, at least some of the operations can be performed by a group of computers (as examples of machines including processors), with these operations being accessible via a network (e.g., the Internet) and via one or more appropriate interfaces (e.g., Application Program Interfaces (APIs).)

Example embodiments can be implemented in digital electronic circuitry, or in computer hardware, firmware, software, or in combinations of them. Example embodiments can be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations can be performed by one or more programmable processors executing a computer program to perform functions by operating on input data and generating output. Method operations can also be performed by, and apparatus of example embodiments can be implemented as, special purpose logic circuitry, e.g., a field programmable gate array (FPGA) or an application-specific integrated circuit (ASIC).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures require consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware can be a design choice. Below are set out hardware (e.g., machine) and software architectures that can be deployed, in various example embodiments.

Fig. 5 is a block diagram illustrating an example machine upon which any one or more of the methodologies herein discussed can be run. In alternative embodiments, the machine operates as a standalone device or can be connected (e.g., networked) to other machines. In a networked deployment, the machine can operate in the capacity of either a server or a client machine in server-client network environments, or it can act as a peer machine in peer-to-peer (or distributed) network environments. The machine can be a personal computer (PC), a tablet PC, a set-top box (STB), a Personal Digital Assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

Example computer system 500 includes a processor 502 (e.g., a central processing unit (CPU), a graphics processing unit (GPU) or both), a main memory 501 and a static memory 506, which communicate with each other via a bus 508. The computer system 500 can further include a display unit 510, an alphanumeric input device 517 (e.g., a keyboard), and a user interface (UI) navigation device 511 (e.g., a mouse). In one embodiment, the display unit 510, input device 517 and UI navigation device 511 are a touch screen display. The computer system 500 can additionally include a storage device (e.g., drive unit) 516, a signal generation device 518 (e.g., a speaker), a network interface device 520, and one or more sensors 521, such as a global positioning system (GPS) sensor, compass, accelerometer, or other sensor.

The storage device 516 includes a machine-readable medium 522 on which is stored one or more sets of data structures and instructions 523 (e.g., software) embodying or utilized by any one or more of the methodologies or functions described herein. The instructions 523 can also reside, completely or at least partially, within the main memory 501 and/or within the processor 502 during execution thereof by the computer system 500, with the main memory 501 and the processor 502 also constituting machine-readable media.

While the machine-readable medium 522 is illustrated in an example embodiment to be a single medium, the term "machine-readable medium" can include a single medium or multiple media (e.g., a centralized or distributed database, and/or associated caches and servers) that store the one or more instructions 523. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including, by way of example, semiconductor memory devices (e.g., Electrically Programmable Read-Only Memory (EPROM), Electrically Erasable Programmable Read-Only Memory (EEPROM)) and flash memory devices; magnetic disks such as internal hard disks and removable disks; magneto-optical disks; and CD-ROM and DVD-ROM disks.

The instructions 523 can further be transmitted or received over a communications network 526 using a transmission medium via the network interface device 520 utilizing any one of a number of well-known transfer protocols (e.g., HTTP). Examples of communication networks include a local area network (LAN), a wide area network (WAN), the Internet, mobile telephone networks, Plain Old Telephone (POTS) networks, and wireless data networks (e.g., Wi-Fi® and WiMax® networks). The term "transmission medium" shall be taken to include any intangible medium that is capable of storing, encoding or carrying instructions for execution by the machine, and includes digital or analog communications signals or other intangible medium to facilitate communication of such software.

### Additional Notes & Examples

Example 1 can include subject matter (such as, in a virtual gateway, a method) comprising masquerading, using one or more processors, as a gateway located at a geographic location, wherein masquerading includes presenting a cloud-facing interface to a cloud-based application and presenting a device interface to a device located at the geographic location. The subject matter of Example 1 can also include receiving a request from the cloud-based application for the device at the geographic location, and communicating with a third-party system to satisfy the request, the third-party system being communicatively coupled to the device.

In Example 2, the subject matter of Example 1 can include wherein the virtual gateway is in a cloud with the cloud-based application.

In Example 3, the subject matter of one or any of Examples 1-2 can include wherein receiving the request includes using a first protocol and communicating with the third-party system includes using a second protocol, the first protocol being different than the second protocol.

In Example 4, the subject matter of Example 3 can include wherein using the second protocol includes translating, within the virtual gateway, the request in the first protocol into a request in the second protocol.

In Example 5, the subject matter of one or any of Examples 3-4 can include communicatively coupling over a communications network to a second device, receiving a request from the cloud-based application for the second device, wherein the request uses the first protocol, and communicating with the second device to satisfy the request for the second device using a third protocol.

In Example 6, the subject matter of Example 5 can include wherein communicating with the second device includes receiving information from the second device, and storing the information from the second device in the virtual gateway, wherein satisfying the second request includes responding based on information from the second device stored in the virtual gateway.

In Example 7, the subject matter of one or any of Examples 1-6 can include wherein masquerading as the gateway at the geographic location includes using a network address corresponding to the geographic location and reproducing a cloud-based application facing interface of the gateway.

In Example 8, the subject matter of one or any of Examples 1-7 can include wherein communicating includes transmitting a message from the virtual gateway to the cloud-based application in response to a reply received from the third-party system, wherein the request includes an inquiry for information from the device.

In Example 9, the subject matter of one or any of Examples 1-8 can include wherein communicating includes initiating, by the virtual gateway, one or more actions by the device based on device commands included in the request.

In Example 10, the subject matter of one or any of Examples 1-9 can include wherein communicating includes receiving device information from the third-party system, and storing the device information in the virtual gateway, wherein satisfying the request includes using the stored device information.

Example 11 can include, or can be combined with the subject matter of one or any combination of Examples 1-10 to include, subject matter (such as a system) comprising a device at a geographic location, a third-party system communicatively coupled to the device, a cloud-based application, and a virtual gateway communicatively coupled to the third-party system and the cloud-based application. The virtual gateway can be configured to masquerade, to the cloud-based application, as a physical gateway at the geographic location, receive a request, from the cloud-based application, for the device, and communicate through the third-party system to the device in order to satisfy the request.

In Example 12, the subject matter of Example 11 can include wherein the virtual gateway is in a cloud with the cloud-based application.

In Example 13, the subject matter of one or any of Examples 11-12 can include wherein the virtual gateway is configured to receive the request in a first protocol and the virtual gateway is configured to communicate using a second protocol with the third-party system.

In Example 14, the subject matter of Example 13 can include wherein the virtual gateway includes a device driver configured to communicate using the second protocol.

In Example 15, the subject matter of Example 14 can include wherein the device driver is configured to translate the request in the first protocol into the second protocol.

In Example 16, the subject matter of one or any of Examples 14-15 can include wherein the virtual gateway further includes a second device driver, the second device driver configured to communicatively couple with a second device, and wherein the virtual gateway is further configured to receive a second request, from the cloud-based application, for the second device using the first protocol and to communicate, using the second device driver and a third protocol, with the second device to satisfy the second request, the third protocol being different than the first protocol and the second protocol.

In Example 17, the subject matter of Example 16 can include wherein the second device driver is further configured to receive information from the second device, store the information from the second device, and wherein the virtual gateway is configured to use the stored information to satisfy the second request.

In Example 18, the subject matter of one or any of Examples 11-17 can include wherein the virtual gateway is configured to reproduce a cloud-based application facing interface of the physical gateway and to use a network address associated with the geographic location to masquerade as the physical gateway.

In Example 19, the subject matter of one or any of Examples 14-18 can include wherein the device driver is further configured to receive a reply from the third-party system in response to the request including an inquiry for information from the device, and wherein the device driver is further configured to transmit a message to the cloud-based application based on the reply.

In Example 20, the subject matter of one or any of Examples 11-19 can include wherein the request includes one or more device commands corresponding to one or more actions of the device, and wherein the device is configured to perform at least one action based on the one or more device commands.

In Example 21, the subject matter of one or any of Examples 14-20 can include wherein the device driver is further configured to receive device information from the third-party system, store the device information, and wherein to satisfy the request includes the stored device information.

In Example 22, the subject matter of one or any of Examples 11-21 can include wherein at least one of the device or the second device are a utility meter.

In Example 23, the subject matter of one or any of Examples 11-22 can include wherein at least one of the device or the second device are an automation or monitoring device.

Example 24 can include, or can be combined with the subject matter of one or any combination of Examples 1-23, subject matter (such as a machine-readable medium including instructions, which when executed by a machine, cause the machine to perform acts) comprising masquerade as a gateway located at a geographic location by presenting a cloud-based application facing interface of the gateway, communicate with a third-party system, via a device driver, to satisfy a request received from the cloud-based application for a first device at the geographic location, and communicate with a second device at the geographic location, via a second device driver, to satisfy a second request received from the cloud-based application.

Example 25 can include, or can be combined with the subject matter of one or any combination of Examples 1-24, subject matter (such as a system for measuring utility usage) comprising a first utility meter and a second utility meter, wherein the first utility meter and the second utility meter are located at a geographic location, a gateway device connected to the first utility meter, a third-party system communicatively coupled through a communications network and the gateway device to the first utility meter, and a processor located at a remote location, wherein the processor is communicatively coupled through a communications network to the second utility meter, the third-party system, and a cloud-based application. The processor can implement a virtual gateway and be configured to masquerade as a physical gateway to the second utility meter, receive a first request for the first utility meter from the cloud-based application, communicate the first request to the first utility meter via the third-party system and the gateway device, receive a second request for the second utility meter from the cloud-based application, and communicate the second request to the second utility meter.

In Example 26, the subject matter of Example 25 can include wherein the cloud-based application is configured to communicate the first request and the second request using a first protocol, wherein to communicate the first request to the first utility meter includes a translation of the first request into a second protocol, and wherein to communicate the second request to the second utility meter includes a translation of the second request into a third protocol.

In Example 27, the subject matter of Example 26 can include wherein the translation of the first request into the second protocol is performed by a first device driver of the virtual gateway, and wherein the translation of the second request into the third protocol is performed by a second device driver of the virtual gateway.

In Example 28, the subject matter of one or any of Examples 26-28 can include wherein the first utility meter is configured to receive the first request, wherein the first request includes an inquiry for information, and communicate the information to the third-party system via the gateway device, wherein the third-party system is configured to communicate the information to the virtual gateway in the second protocol, and wherein the virtual gateway is configured to communicate the information to the cloud-based application in the first protocol.

Example 29 can include, or can be combined with subject matter of one or any of Examples 1-28 to include, subject matter (such as a system for accessing monitoring and automation (M&A) devices) comprising a first M&A device and a second M&A device located at a geographic location, a third-party system communicatively coupled over a communications network to the first M&A device, a cloud-based application, and a processor communicatively coupled over a communications network to the cloud-based application, the third-party system, and the second M&A device, wherein the processor is located at a remote location. The processor can implement a virtual gateway and be configured to implement a cloud-facing interface of the gateway device, receive a request at the cloud-facing interface from the cloud-based application, communicate the request to the first M&A device via the third-party system, communicate the request to the second M&A device, receive information from the first M&A device and the second M&A device, and communicate the information to the cloud-based application.

In Example 30, the subject matter of Example 29 can include wherein the cloud-based application is configured to communicate with the virtual gateway in a first protocol.

In Example 31, the subject matter of Example 30 can include wherein the third-party system is configured to communicate with the virtual gateway in a second protocol, and wherein the third-party system is configured to communicate with the first M&A device in a third protocol.

In Example 32, the subject matter of Example 31 can include wherein the virtual gateway includes a first device driver configured to translate the request and the information between the first protocol and the second protocol.

In Example 33, the subject matter of one or any of Examples 30-32 can include wherein the second M&A device is configured to communicate with the virtual gateway in a fourth protocol, and wherein the first protocol is different than the second protocol.

In Example 34, the subject matter of Example 33 can include wherein the virtual gateway includes a second device driver configured to translate the request and the information between the first protocol and the second protocol.

In Example 35, the subject matter of one or any of Examples 29-34 can include wherein the request includes M&A device instructions, and wherein at least one of the first M&A device or the second M&A device are configured to execute the M&A device instructions.

In Example 36, the subject matter of Example 35 can include wherein at least one of the first M&A device or the second M&A device are a networked thermostat, and wherein the networked thermostat adjusts the output of a heating or cooling system based on the M&A device instructions.

Example 37 can include, or can be combined with the subject matter of one or any of Examples 1-37 to include, subject matter (such as a method for accessing monitoring and automation (M&A) devices) comprising implementing, in a virtual gateway using one or more processors, a cloud facing interface of a physical gateway, using, by the virtual gateway, a location identity of a geographic location, wherein the virtual gateway is remotely located from the geographic location, communicating, by a cloud based application through a communications network, a request to the virtual gateway, wherein the request is for a M&A device located at the geographic location, communicating, by the virtual gateway through the communications network, the request to a third party system, communicating, by the third-party system, the request to the M&A device, and satisfying, by the M&A device, the request.

In Example 38, the subject matter of Example 37 can include wherein satisfying the request includes returning information to the third-party system, wherein communicating the request to the third-party system includes receiving the information at the virtual gateway, and wherein communication the request to the virtual gateway includes receiving the information at the cloud-based application.

In Example 39, the subject matter of one or any of Examples 37-38 can include wherein communicating the request to the virtual gateway includes communicating, by the cloud-based application, a second request for a second M&A device to the virtual gateway, wherein the second M&A device is located at the geographic location and communicatively coupled to the virtual gateway via the communications network, communicating, by the virtual gateway, the second request to the second M&A device, and satisfying, by the second M&A device, the second request.

In Example 40, the subject matter of Example 39 can include wherein communicating the request and the second request to the virtual gateway includes using a first protocol, wherein communicating the request to the third-party system includes using a second protocol, and wherein communicating the second request to the second M&A device includes using a third protocol.

In Example 41, the subject matter of Example 40 can include wherein using the second protocol includes translating, using a first device driver, the request from the first protocol to the second protocol, and wherein using the third protocol includes translating, using a second device driver, the second request from the first protocol to the third protocol.

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented at least in part. Some examples can include a tangible computer-readable medium or tangible machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, the code may be tangibly stored on one or more volatile or non-volatile computer-readable media during execution or at other times. These computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the invention should be determined with reference to the appended claims, along with the full scope of equivalents to which such claims are entitled.

## Claims

1. A system (100) comprising:
a device (105) at a geographic location;
a third party system (110) communicatively coupled to the device,
a cloud-based application (115); and
a virtual gateway (120) communicatively coupled to the third-party system and the cloud-based application, the virtual gateway configured to:
masquerade, to the cloud-based application, as a physical gateway at the geographic location;
receive a request, from the cloud-based application, for the device; and
communicate through the third-party system to the device in order to satisfy the request.

2. The system (100) of claim 1, wherein the virtual gateway (120) is in a cloud (125) with the cloud-based application (115).

3. The system (100) of claims 1 or 2, wherein the virtual gateway (120) is configured to receive the request in a first protocol and the virtual gateway is configured to communicate using a second protocol with the third-party system.

4. The system (100) of claim 3, wherein the virtual gateway (120) includes a device driver (130) configured to communicate using the second protocol.

5. The system (100) of claim 4, wherein the device driver (130) is configured to translate the request in the first protocol into the second protocol.

6. The system (100) of claims 4 or 5, wherein the virtual gateway (120) further includes a second device driver (135), the second device driver configured to communicatively couple with a second device (140); and
wherein the virtual gateway (120) is further configured to receive a second request, from the cloud-based application (115), for the second device using the first protocol and to communicate, using the second device driver and a third protocol, with the second device to satisfy the second request, the third protocol being different than the first protocol and the second protocol.

7. The system (100) of claim 6, wherein the second device driver (135) is further configured to:
receive information from the second device (135);
store the information from the second device (135); and
wherein the virtual gateway (120) is configured to use the stored information to satisfy the second request.

8. The system (100) of any of claims 1-7, wherein the request includes one or more device commands corresponding to one or more actions of the device; and
wherein the device (105) is configured to perform at least one action based on the one or more device commands.

9. A method for use in a system (100) including a virtual gateway (120), the method comprising:
masquerading, using one or more processors, as a gateway located at a geographic location, wherein masquerading includes presenting a cloud-facing interface (145) to a cloud-based application (115) and presenting a device interface to a device (105) located at the geographic location;
receiving a request from the cloud-based applications for the device at the geographic location; and
communicating with a third-party system (110) to satisfy the request, the third-party system being communicatively coupled to the device.

10. The method of claim 9, wherein receiving the request includes using a first protocol and communicating with the third-party system includes using a second protocol, the first protocol being different than the second protocol.

11. The method of claims 9 or 10, further comprising:
communicatively coupling over a communications network to a second device (140);
receiving a request from the cloud-based application (115) for the second device, wherein the request uses the first protocol; and
communicating with the second device to satisfy the request for the second device using a third protocol.

12. The method of claim 11, wherein communicating with the second device (140) includes:
receiving information from the second device; and
storing the information from the second device in the virtual gateway (120);
wherein satisfying the second request includes responding based on information from the second device stored in the virtual gateway.

13. The method of an of claims 9-12, wherein masquerading as the gateway at the geographic location includes using a network address corresponding to the geographic location and reproducing a cloud-based application facing interface (145) of the gateway.

14. The method of any of claims 9-13, wherein communicating includes initiating, by the virtual gateway (120), one or more actions by the device (105) based on device commands included in the request.

15. The method of any of claims 9-14, wherein communicating includes:
receiving device information from the third-party system (110); and
storing the device information in the virtual gateway (120);
wherein satisfying the request includes using the stored device information.

## Patentansprüche

1. System (100), umfassend:
ein Gerät (105) an einem geographischen Standort;
ein Drittsystem (110), das kommunikativ mit dem Gerät gekoppelt ist,
eine cloud-basierte Anwendung (115); und
ein virtuelles Gateway (120), das kommunikativ mit Drittsystem und der cloud-basierten Anwendung gekoppelt ist, wobei das virtuelle Gateway dazu konfiguriert ist,
sich für die cloud-basierte Anwendung als ein physisches Gateway an dem geographischen Standort zu maskieren;
eine Anforderung von der cloud-basierten Anwendung für das Gerät zu empfangen; und
durch das Drittsystem mit dem Gerät zu kommunizieren, um die Anforderung zu erfüllen.

2. System (100) gemäß Anspruch 1, wobei das virtuelle Gateway (120) sich mit der cloud-basierten Anwendung (115) in einer Cloud (125) befindet.

3. System (100) gemäß Anspruch 1 oder 2, wobei das virtuelle Gateway (120) dazu konfiguriert ist, die Anforderung in einem ersten Protokoll zu erhalten und das virtuelle Gateway dazu konfiguriert ist, mit Hilfe eines zweiten Protokolls mit dem Drittsystem zu kommunizieren,

4. System (100) gemäß Anspruch 3, wobei das virtuelle Gateway (120) einen Gerätetreiber (130) umfasst, der dazu konfiguriert ist, mit Hilfe des zweiten Protokolls zu kommunizieren

5. System (100) gemäß Anspruch 4, wobei der Gerätetreiber (130) dazu konfiguriert ist, die Anforderung in dem ersten Protokoll in das zweite Protokoll zu übersetzen.

6. System (100) gemäß Anspruch 4 oder 5, wobei das virtuelle Gateway (120) weiterhin einen zweiten Gerätetreiber (135) umfasst, wobei der zweite Gerätetreiber dazu konfiguriert ist, sich kommunikativ mit einem zweiten Gerät (140) zu koppeln; und
wobei das virtuelle Gateway (120) weiterhin dazu konfiguriert ist, eine zweite Anforderung aus der cloud-basierten Anwendung (115) für das zweite Gerät mit Hilfe des ersten Protokolls zu empfangen, und mit Hilfe des zweiten Gerätetreibers und eines dritten Protokolls mit dem zweiten Gerät zu kommunizieren, um die zweite Anforderung zu erfüllen, wobei das dritte Protokoll sich von dem ersten Protokoll und dem zweiten Protokoll unterscheidet.

7. System (100) gemäß Anspruch 6, wobei der zweite Gerätetreiber (135) weiterhin dazu konfiguriert ist:
Informationen von dem zweiten Gerät (135) zu empfangen;
die Informationen von dem zweiten Gerät (135) zu speichern; und
wobei das virtuelle Gateway (120) dazu konfiguriert ist, die gespeicherten Informationen zu verwenden, um die zweite Anforderung zu erfüllen.

8. System (100) gemäß einem der Ansprüche 1 bis 7, wobei die Anforderung einen oder mehrere Gerätebefehle umfasst, die mit einer oder mehreren Aktionen des Geräts übereinstimmen; und
wobei das Gerät (105) dazu konfiguriert ist, wenigstens eine Aktion durchzuführen je nach dem einen oder den mehreren Gerätebefehlen.

9. Verfahren zur Verwendung in einem System (100), das ein virtuelles Gateway (120) umfasst, wobei das Verfahren umfasst:
Maskieren, mit Hilfe eines oder mehrerer Prozessoren, als ein Gateway, der sich an dem geographischen Standort befindet, wobei das Maskieren umfasst, dass einer cloud-basierten Anwendung (115) eine zur Cloud ausgerichtete Schnittstelle (145) präsentiert wird, und dass einem Gerät (105), das sich an dem geographischen Standort befindet, eine Geräteschnittstelle präsentiert wird;
Empfangen einer Anforderung von den cloud-basierten Anwendungen für das Gerät an dem geographischen Standort; und
Kommunizieren mit einem Drittsystem (110), um die Anforderung zu erfüllen, wobei das Drittsystem kommunikativ mit dem Gerät gekoppelt ist.

10. Verfahren gemäß Anspruch 9, wobei das Empfangen der Anforderung das Verwenden eines ersten Protokolls umfasst und das Kommunizieren mit dem Drittsystem das Verwenden eines zweiten Protokolls umfasst, wobei das erste Protokoll sich von dem ersten Protokoll unterscheidet.

11. Verfahren gemäß Anspruch 9 oder 10, weiterhin umfassend:
kommunikatives Koppeln mit einem zweiten Gerät (140) über ein Kommunikationsnetzwerk;
Empfangen einer Anforderung von der cloud-basierten Anwendung (115) für das zweite Gerät, wobei die Anforderung das zweite Protokoll verwendet; und
Kommunizieren mit dem zweiten Gerät, um die Anforderung für das zweite Gerät mit Hilfe des dritten Protokolls zu erfüllen.

12. Verfahren gemäß Anspruch 11, wobei das Kommunizieren mit dem zweiten Gerät (140) umfasst:
Empfangen von Informationen von dem zweiten Gerät (135); und
Speichern der Informationen von dem zweiten Gerät in dem virtuellen Gateway (120);
wobei das Erfüllen der zweiten Anforderung ein Reagieren je nach den Informationen von dem zweiten Gerät, die in dem virtuellen Gateway gespeichert sind, umfasst.

13. Verfahren gemäß einem der Ansprüche 9 bis 12, wobei das Maskieren als das Gateway an dem geographischen Standort das Verwenden einer Netzwerkadresse, die mit dem geographischen Standort übereinstimmt, und das Reproduzieren einer Schnittstelle (145) des Gateways, die zu der cloud-basierten Anwendung ausgerichtet ist, umfasst.

14. Verfahren gemäß einem der Ansprüche 9 bis 13, wobei das Kommunizieren das Initiieren, durch das virtuelle Gateway (120), einer oder mehrerer Aktionen durch das Gerät (105) je nach den in der Anforderung enthaltenen Gerätebefehlen umfasst.

15. Verfahren gemäß einem der Ansprüche 9 bis 14,wobei das Kommunizieren umfasst:
Empfangen von Geräteinformationen von dem Drittsystem (110); und
Speichern der Geräteinformationen in dem virtuellen Gateway (120);
wobei das Erfüllen der Anforderung ein Verwenden der gespeicherten Geräteinformationen umfasst.

## Revendications

1. Système (100) comprenant :
un dispositif (105) à un emplacement géographique ;
un système tiers (110) couplé de manière communicative au dispositif,
une application basée sur un nuage (115) ; et
une passerelle virtuelle (120) couplée de manière communicative au système tiers et à l'application basée sur un nuage, la passerelle virtuelle configurée pour :
se déguiser, vis-à-vis de l'application basée sur un nuage, comme une passerelle physique à l'emplacement géographique ;
recevoir une demande, en provenance de l'application basée sur un nuage, pour le dispositif ; et
communiquer par l'intermédiaire du système tiers au dispositif afin de satisfaire à la demande.

2. Système (100) selon la revendication 1, dans lequel la passerelle virtuelle (120) est dans un nuage (125) avec l'application basée sur un nuage (115).

3. Système (100) selon les revendications 1 ou 2, dans lequel la passerelle virtuelle (120) est configurée pour recevoir la demande dans un premier protocole et la passerelle virtuelle est configurée pour communiquer en utilisant un deuxième protocole avec le système tiers.

4. Système (100) selon la revendication 3, dans lequel la passerelle virtuelle (120) inclut un pilote de dispositif (130) configuré pour communiquer en utilisant le deuxième protocole.

5. Système (100) selon la revendication 4, dans lequel le pilote de dispositif (130) est configuré pour traduire la demande dans le premier protocole en le deuxième protocole.

6. Système (100) selon les revendications 4 ou 5, dans lequel la passerelle virtuelle (120) inclut en outre un second pilote de dispositif (135), le second pilote de dispositif configuré pour se coupler de manière communicative avec un second dispositif (140) ; et
dans lequel la passerelle virtuelle (120) est en outre configurée pour recevoir une seconde demande, en provenance de l'application basée sur un nuage (115), pour le second dispositif en utilisant le premier protocole et pour communiquer, en utilisant le second pilote de dispositif et un troisième protocole, avec le second dispositif pour satisfaire à la seconde demande, le troisième protocole étant différent du premier protocole et du deuxième protocole.

7. Système (100) selon la revendication 6, dans lequel le second pilote de dispositif (135) est en outre configuré pour :
recevoir des informations en provenance du second dispositif (135) ;
stocker les informations en provenance du second dispositif (135) ; et
dans lequel la passerelle virtuelle (120) est configurée pour utiliser les informations stockées pour satisfaire à la seconde demande.

8. Système (100) selon l'une quelconque des revendications 1 à 7, dans lequel la demande inclut une ou plusieurs commandes de dispositif correspondant à une ou plusieurs actions du dispositif ; et
dans lequel le dispositif (105) est configuré pour effectuer au moins une action basée sur les une ou plusieurs commandes de dispositif.

9. Procédé destiné à être utilisé dans un système (100) incluant une passerelle virtuelle (120), le procédé comprenant :
le déguisement, en utilisant un ou plusieurs processeurs, comme une passerelle située à un emplacement géographique, où le déguisement inclut la présentation d'une interface faisant face à un nuage (145) à une application basée sur un nuage (115) et la présentation d'une interface de dispositif à un dispositif (105) situé à l'emplacement géographique ;
la réception d'une demande en provenance de l'application basée sur un nuage pour le dispositif à l'emplacement géographique ; et
la communication avec un système tiers (110) pour satisfaire à la demande, le système tiers étant couplé de manière communicative au dispositif.

10. Procédé selon la revendication 9, dans lequel la réception de la demande inclut l'utilisation d'un premier protocole et la communication avec le système tiers inclut l'utilisation d'un deuxième protocole, le premier protocole étant différent du deuxième protocole.

11. Procédé selon les revendications 9 ou 10, comprenant en outre :
le couplage communicatif sur un réseau de communications à un second dispositif (140) ;
la réception d'une demande en provenance de l'application basée sur un nuage (115) pour le second dispositif, où la demande utilise le premier protocole ; et
la communication avec le second dispositif pour satisfaire à la demande pour le second dispositif en utilisant un troisième protocole.

12. Procédé selon la revendication 11, dans lequel la communication avec le second dispositif (140) inclut :
la réception d'informations en provenance du second dispositif ; et
le stockage des informations en provenance du second dispositif dans la passerelle virtuelle (120) ;
dans lequel la satisfaction de la seconde demande inclut le fait de répondre sur la base d'informations en provenance du second dispositif stockées dans la passerelle virtuelle.

13. Procédé selon l'une quelconque des revendications 9 à 12, dans lequel le déguisement comme la passerelle à l'emplacement géographique inclut l'utilisation d'une adresse de réseau correspondant à l'emplacement géographique et la reproduction d'une interface faisant face à une application basée sur un nuage (145) de la passerelle.

14. Procédé selon l'une quelconque des revendications 9 à 13, dans lequel la communication inclut l'initiation, par la passerelle virtuelle (120), d'une ou plusieurs actions par le dispositif (105) basées sur des commandes de dispositif incluses dans la demande.

15. Procédé selon l'une quelconque des revendications 9 à 14, dans lequel la communication inclut :
la réception d'informations de dispositif en provenance du système tiers (110) ; et
le stockage des informations de dispositif dans la passerelle virtuelle (120) ;
dans lequel la satisfaction de la demande inclut l'utilisation des informations de dispositif stockées.
